(19)

Europäisches
Patentamt
European
Patent Office
Office européen
des brevets

(11) **EP 2 053 783 A1**

(12) **EUROPEAN PATENT APPLICATION**

(43) Date of publication:
 **29.04.2009 Bulletin 2009/18**

(51) Int Cl.:
 *H04L 12/24* (2006.01)    *H04L 12/26* (2006.01)

(21) Application number: **07021034.9**

(22) Date of filing: **26.10.2007**

(84) Designated Contracting States:
 **AT BE BG CH CY CZ DE DK EE ES FI FR GB GR HU IE IS IT LI LT LU LV MC MT NL PL PT RO SE SI SK TR**
 Designated Extension States:
 **AL BA HR MK RS**

(71) Applicant: **Nokia Siemens Networks Oy**
 **02610 Espoo (FI)**

(72) Inventor: **Jiang, Feng**
 **410015 Changsha (CN)**

(74) Representative: **Bruglachner, Thomas E.**
 **Nokia Siemens Networks GmbH & Co. KG**
 **Patentabteilung**
 **Postfach 80 17 60**
 **81617 München (DE)**

(54) **Method and system for identifying VoIP traffic in networks**

(57)    The present invention relates to a method for identifying VoIP traffic in networks and a system thereof. Subscribers, which all data connections correspond to, are divided into potential VoIP application users and ordinary users based on user identity (205). Traffic of potential VoIP application users is monitored and statistics of interest are collected (201). The collected statistics are correlated with *a priori* knowledge of VoIP applications' traffic profile, and similarity index $SI_P$ is calculated (202). If analysis reveals a connection exhibits high correlation between said statistics and the priori knowledge of VoIP applications' traffic profile, perturbation is applied to the connection of the monitored potential VoIP application user (204) and feedback $SI_a$ is observed. The similarity index $SI_P$ and the feedback $SI_a$ are combined together to calculate identification result D. If the identification result D is greater than a threshold, the connection of the monitored potential VoIP application user is identified as a VoIP application connection. The present invention has not only enhanced identification accuracy, but also demonstrated advantages in respect of robustness, scalability and extensibility.

FIG.2

**Description**

The present invention generally relates to network traffic identification technology; and more particularly, relates to method for active identification of VoIP traffic in networks and system thereof.

Last decade brought with it drastic advances in communication technology. Especially, rapid development of Internet has not only lowered the cost of staying connected, its wide availability also facilitates immigration of communication means which traditionally root in dedicated networks, e.g.:

telephony, fax, television and etc. Internet applications are computer software that implements these communication means, which generally follow design philosophy of their counterparts in dedicated networks: one complicated (and usually strong) server surrounded by many simple clients. A major problem is that the server becomes a critical point and once it fails or be blocked the whole service collapses immediately.

To cope with this crisis, peer-to-peer (P2P) communication and overlay networks have been constantly evolving since 1999 (Napster), and now a wide range of Internet applications, including file-sharing, content delivery, telephony and video broadcasting, have greatly benefited from this breakthrough. Technically, P2P networks are decentralized in natural by equalizing the roles of communication participants to form an overlay network. In this network, every participant can serve the network (as a "server") while being served (as a "client") by the network, so work load is evenly distributed and resources are efficiently utilized, and more importantly, outage of a single participant only has local impact and will be automatically recovered by network adaptation.

Recently, P2P-based Internet telephony applications (aka:

Voice-over-IP, VoIP) have attracted remarkable attention from a variety of communities. As one of these communities, network operators have special interest in third-party P2P telephony applications because they directly competes with traditional telephony services but generally hard to control, charge or even measure, resulting in serious erosion of operators' profits. For instance, Skype, a free voice communication program under http://www.skype.com, the most popular P2P telephony application today that enjoys millions of registered users, provides premium sound quality and software usability, and its proliferation among mobile subscribers is considered a matter of time after its proven success in fixed networks.

Traditionally, service control has been an interesting topic for operators. To enforce service control, operators have to install service control equipments (e.g. firewalls) in their networks. For these equipments, traffic identification is a prerequisite of subsequent processing or policing. To this end, we present a novel method to identify VoIP traffic in networks without inspecting packet payloads, which enables robust identification of VoIP traffic and its high performance implementation.

Traditional VoIP applications use either well-known ports or centralized servers, or they contain plain signatures that are readily discernable by service control equipments. In contrast, new generation VoIP applications with P2P and encryption technology present great challenge to this kind of equipments, granting them ability to escape from being identified.

More specifically, P2P-based network architecture allows a VoIP call to take place between any caller and callee without intervention of specific server(s) and to send packets via any port, even tunneling through other protocols (e.g. HTTP). This prevents service control equipments from knowing its presence by examining whom it contacts. For instance, two Skype users can setup a call connection just between them, and in case that direct connection is not the best choice, a Skype SN (i.e. super node) will be dynamically selected to relay traffic of the call. One phenomenon noteworthy is that, at their startup stage many applications contact a well-known server, for example, to register or logon themselves. However, this fact is insufficient to identify VoIP traffic since they usually setup another peer-to-peer connection to deliver actual data content (e.g. text message, voice and etc.).

In terms of encryption, many P2P applications have integrated this technology, in which packet payloads are encrypted in end-to-end manner, frustrating inspectors in between to see actual content they carry, and essentially invalidating signature-based devices. Referring to Skype again, its software implementation includes an encryption layer to perform strong TLS/AES encryption for (almost) all packets it sends.

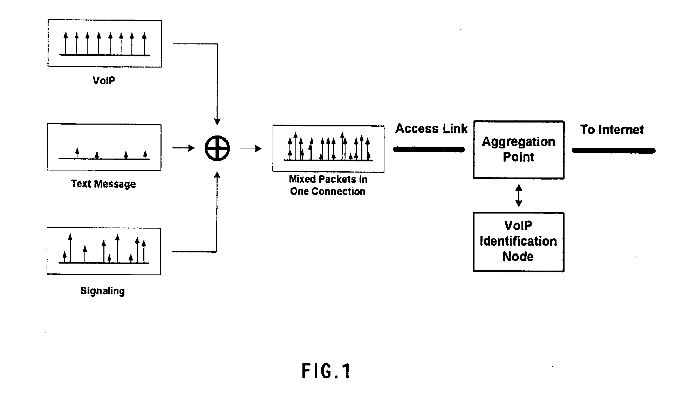

Another practical problem comes from these VoIP applications' violation of the traditional "one connection for one type of traffic" rule. As depicted in Figure 1, new VoIP applications tend to carry everything in one connection, which differs from traditional ones that split their traffic, i.e. signaling, text message, multimedia and so on, to different socket connections. This fact causes a new problem for operators, who attempt to differentiate services, because the current service is now finer-granular than connections: one connection may contain many different types of services, for which existing methods and equipments fail to handle because they usually assume socket connection the smallest unit to be handled.

This topic falls into a broader research area named P2P traffic identification. Priori arts are generally classified into two categories: signature-based methods and behavior-based methods. Their main disadvantages are explained as follows:

Signature-based methods inspect (sometimes only several initial) packets of a connection for some empirically derived signatures, usually control keywords. If they match, these methods conclude that the connection is generated by a certain application that has those signatures [1] [2]. Some techniques, e.g. regular expression, can be utilized to facilitate presenting complex signatures. However, the most important disadvantage that render these methods less effective is their total dependency on signatures. These methods must frequently update their signature database to reflect software mutations, resulting in raised maintenance costs. Moreover, they are unable to identify packets with end-to-end encryption, which will become more and more common since software vendors are aware of threats of being blocked. Finally, byte-to-byte inspection is CPU- and memory-intensive, boosting the costs and prices of such products.

Behavior-based methods statistically analyze packet interactions among peers that form a P2P overlay network. K. Suh in [3] proposed to identify the existence of Skype relaying node within a given network by observing raise and decline edges of bit rate of each connection on ingress and egress point of that network. X. Wang [4] suggested watermarking a potential connection by adding time perturbation, in order to track its final destination of that connection. Regarding to performance, since these methods need to compare and correlate statistics of every two connections, they are o(nlogn) complex and exhibit serious scalability problem if amount of connections under monitoring is very large, which is typical in operator-level network. Additionally, these methods assume that it is feasible to synchronize traffic statistics of two access links (first and last hop of a connection) to the service identification point. This assumption is, however, less true in real scenario because a VoIP call can take place across different networks, operators or even countries. Therefore, even if it is possible, operators of a single network will have to spend extensive costs and efforts in order to obtain these statistics from other operators.

Targeting at high robustness and low complexity, we propose this invention to effectively identify VoIP traffic by exploiting their intrinsic behavioral characteristics. Since wideband adaptive VoIP codec is considered promising for future voice applications, the high identification accuracy is achieved by combining active identification to the passive identification in the present invention.

According to one aspect of the present invention, a method for identifying VoIP traffics in networks is provided, which comprises the following steps:

dividing all subscribers, which all data connections correspond to, into potential VoIP application users and ordinary users based on user identity; monitoring traffic of potential VoIP application users and collecting statistics of interest; correlating the collected statistics with a *priori* knowledge of VoIP applications' traffic profile, and calculating similarity index $SI_p$; if analysis revealing some connections exhibit high correlation between said statistics and the priori knowledge of VoIP applications' traffic profile, perturbation being applied to these connections and observe feedback $SI_a$; combining the similarity index $SI_p$ and
the feedback $SI_a$ together to calculate the identification result D; if the identification result D being greater than a threshold, identifying the connection of the monitored potential VoIP application user as VoIP application connections.

If a subscriber communicates with well-known servers, the subscriber is taken as a potential VoIP application user.

In some situations it is difficult to define well-known servers. In these cases, all subscribers are defined as potential users whose connection is subject to traffic monitoring.

Moreover, the inventive method can use heuristics to obtain higher performance by analyzing the interaction processes during user logins. These heuristics include but are not limited to applying deep packet inspection (DPI) to user login request packets, analyzing user login connection patterns, and so on.

The statistics of interest are two-tiered: at connection level, duration and average bit rate are considered; at data packet level, packet size and timestamp are considered. Depending on codecs in the specific VoIP application, the statistics of interest can be selected.

In the present inventive method, the perturbation is, for instance, packet drop rate. User identity is an identification used by the network to differentiate different users. For example, user identity is at least one of PDP context of WCDMA mobile communication networks, IP address or PPP session ID of fixed communication networks.

According to another aspect of the present invention, a system for identifying VoIP traffics in networks is provided. Three key modules of the systems are Packet Statistic Collector, Analyzer and Detector and Perturbation Generator. Packet Statistic Collector is used to monitor traffic of potential VoIP application users divided by the General Classifier, and to collect statistics of interest. Analyzer and Detector is used to decide whether one connection contains VoIP traffic, by correlating statistics outputted by the Packet Statistic Collector with a priori knowledge of VoIP applications' traffic profile. Perturbation Generator interacts with Analyzer and Detector and generates statistics perturbation to connections of monitored potential VoIP application users.

In addition to aforementioned three modules, the system also comprises an optional module which may improve performance, VoIP Attribute Recognizer, which uses heuristics to analyze the interactions during user login process. The VoIP Attribute Recognizer accepts the connections filtered by L3/L4 Information Filter and returns the results through an internal control message mechanism to the General Classifier. These heuristics include but are not limited to applying deep packet inspection (DPI) to user login request packets, analyzing user login connection patterns, and so on.

The system also needs make use of the functions of the following two system functions that already in place, General Classifier and L3/L4 Information Filter. The L3/L4 Information Filter is connected to the downstream of the General Classifier to filter information regarding VoIP and return the filtered results to the General Classifier through an internal control messaging mechanism, so that subscribers, which all data connections correspond to, are divided into potential VoIP application users and ordinary users by the General Classifier based on user identity. These two modules provide the fundamental functions of the whole service differentiation system, and are used by all the specific protocol identification modules thereof.

In the Analyzer and Detector, the collected statistics are correlated with a priori knowledge of VoIP applications' traffic profile, and similarity index $SI_p$ is calculated. Once analysis reveals a connection exhibit high correlation between said statistics and the priori knowledge of VoIP applications' traffic profile, perturbation is applied to connections of the monitored potential VoIP application users and feedback $SI_a$ is observed. The similarity index $SI_p$ and the feedback $SI_a$ are combined together to calculate the identification result D. If the identification result D is greater than a threshold, the connection of the monitored potential VoIP application user is identified as VoIP application connections.

The system of present invention is installed on the aggregation point of traffic being identified.

Advantage of this invention includes the following five aspects:

- Accuracy
  By combining active perturbation to passive monitoring, this invention is able to identify VoIP traffic featured with P2P and encryption, which is considered impossible for any prior arts. Known VoIP traffic profile provides baseline accuracy, reinforced by adaptation behavior of VBR VoIP codec.

- Robustness
  In the method proposed in this invention, dependency on VoIP codec characteristics, instead of VoIP applications (and their implementation), greatly contributes to robustness of this method. Since VoIP codec is much less mutable than VoIP applications, this method is able to identify a broad range of VoIP applications without requiring identifying these applications one-by-one, or even version-by-version.

- Scalability
  Collecting and analyzing packet-level statistics are more efficient than traditional byte-to-byte payload inspection and more suitable for large-scale implementation. If offline analysis is necessary, this method gains another advantage which comes from saving computer memory or disk storage space.

- Extensibility
  This invention can be extended to identify universal VoIP traffic in many types of networks (e.g. landline network), if traffic profile of corresponding applications is known.

- Legal, Privacy, Logistic and Fiscal Advantage
  Because it requires no payload inspection, this method is free of legal and privacy problems faced by other methods used in many similar products. Also, due to its robustness, this method can lower operators' maintenance cost by eliminating frequent update of signature/server (SN) database. Also, since the method proposed in this invention does not require any specialized hardware, it can be implemented over common hardware platforms, so operators benefit from maintaining a smaller and simpler inventory for backup and substitution in case of hardware failure.

The invention will be detailed below in conjunction with the accompanying drawings, in which:

Figure 1 illustrates several different services, which may be included in VoIP applications,
Figure 2 presents structure of a system for identifying Skypish VoIP traffic.

Preferred Embodiments

To better understand the present invention, now the abbreviations used in the invention will be explained as follows:

VoIP: Voice-over-IP, a technology to send digitalized voice over IP network.
P2P: Peer-to-Peer, a decentralized network architecture, often constructed over existing IP networks.
SN: Super Node, a special peer in a P2P network that provides shared service, e.g. indexing, relaying and etc. A P2P network can contain many such super nodes.

HTTP: Hyper Text Transfer Protocol, a protocol usually used to deliver web content.

Codec: Coder and Decoder, a computer program that converts digital media to and from specific formats.

VBR: Variable Bit Rate technology, which could change output bit rates of voice coding while working.

DPI: deep packet inspection, which is a technology that attempts to classify traffic according to signatures contained in the packets.

Noticing that implementation details of VoIP applications may differ from one type to another, we focus on Skype, the most popular application, to present an exemplary implementation.

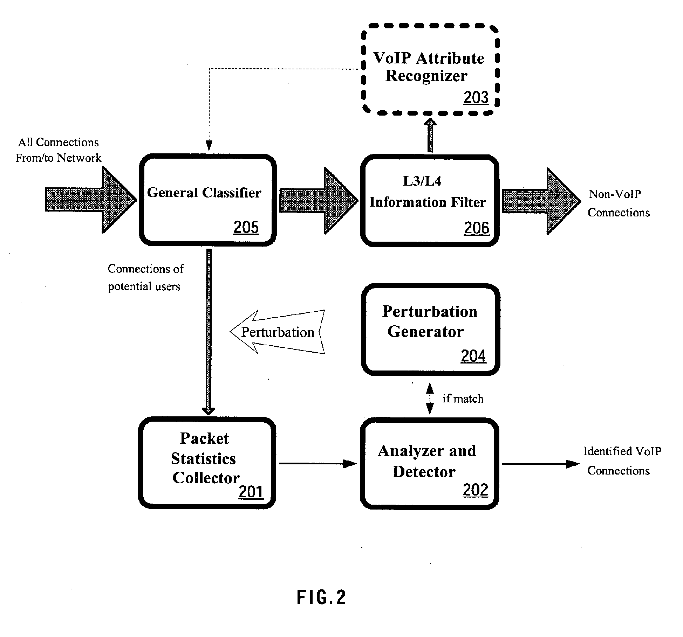

Figure 2 provides a block diagram for identifying Skypish VoIP traffic, which consists of three passive identification modules, in which one optional module is included, one active identification module and two shared system utility modules:

- Packet Statistic Collector 201 (passive module)
  This module monitors traffic of potential VoIP users and collects statistics required for later analysis. Statistics of interest are two-tiered: at connection level, duration and average bit rate are included; at data packet level, packet size and timestamp are included. Depending on codecs in the specific VoIP application, statistics of interest can be selected.

- Analyzer and Detector 202 (passive module)
  Having statistics as input, this module decides whether one connection possibly contains VoIP traffic, by correlating input with a priori knowledge of certain applications' traffic profile, e.g. traffic profile of Skype. Network queuing has impact on delay that a packet experiences on a network device, especially when the network is heavily loaded. To address this problem, we consider fluctuations in packet inter-arrival time as noises and incorporate common statistical signal processing techniques to identify desired VoIP traffic.

- VoIP Attribute Recognizer 203 (passive module, optional)
  Considering some clues associated with certain applications (e.g. Skype) are reported in literatures, it is possible to utilize these clues, if available, as heuristics to differentiate one VoIP application from another. The inventive method can use these heuristics to obtain higher accuracy by analyzing the interaction processes during user logins. Possible heuristics include applying deep packet inspection (DPI) to user login request packets, analyzing user login connection patterns, and so on. However, these clues are highly subject to changes in software implementation, and unable to identify VoIP traffic alone, because VoIP applications can open one new connection after the completion of logins to transfer actual voice data. But for the new connection, there are no previously described clues available to identify. This module is optional, which further processes the filtered resluts of the L3/L4 Information Filter 206. The processed results are delivered to the General Classifier 205 through the internal control message mechanism. In case that this module is not present, results from L3/L4 Information Filter are directly supplied to the General Classifier to define potential users.

- Perturbation Generator 204 (active module)
  Interacting with Analyzer and Detector, this module generates statistical perturbation, i.e. packet drop rate, to target connections. Voice Codecs, which target connections correspond to, will perceive this perturbation as changes in network condition and trigger the corresponding adaptive mechanism. Results about how Codecs of target connections react to this perturbation are recorded and analyzed subsequently by Packet Statistic Collector 201 and Analyzer and Detector 202.

- General Classifier 205 (passive module, shared system utility)
  Many systems/platforms include this shared module to perform general flow-based classification. This invention utilizes this classifier to divides all data connections into two categories based on user identity: potential VoIP users and ordinary users. The user identity is the identification used by the network to differentiate different users, for example, PDP context of WCDMA mobile communication networks, IP address or PPP session ID of fixed communication networks. Connections belonging to potential VoIP users are delivered to Packet Statistics Collector for later processing.

- L3/L4 Information Filter 206 (passive module, shared system utility)
  As aforementioned, Skype, as well as most SIP-based applications, exchanges information with one of well-known servers when clients are connected to one of well-known servers. According to this behavior, this module tags a subscriber as potential VoIP user if he communicates with any of these servers. And then, the filtered results are returned to the General Classifier through internal control message mechanism, shown as dashed line in figure 2. Considering that potential VoIP users are small in number, this behavior is helpful to confine monitoring task to only a small portion of traffic.

According to results of L3/L4 Filtering, all network subscribers (left input in Figure 2) are classified into potential VoIP subscribers and ordinary ones. Each connection of potential VoIP subscribers is monitored and its statistics are collected, without concerning actual content carried in packet payloads. Statistics are subject to analysis, which correlates them to known traffic profile of corresponding applications, and similarity index $SI_p$ is calculated. Once analysis reveals high correlation between the two, perturbation is added to the connection and their feedback is observed, which is defined as $SI_a$. Finally, these two quantities are combined together to calculate the identification result D (see Equation (1)). For instance, $SI_a$ and $SI_p$ can be summed up with weights δ and if the result is greater than a threshold $\eta_0$, this connection is identified as a VoIP connection (see Equation (2)).

$$D = D(SI_p, SI_a) \qquad (1)$$

$$D = \left\lfloor \frac{\delta \cdot SI_p + (1-\delta) \cdot SI_a}{\eta_0} \right\rfloor \qquad (2)$$

In the equation (2), the weight δ and the threshold $\eta_0$ are determined depending on specific VoIP applications. And the value of the weight δ ranges from 1 to 0.

Implementation of this system takes the form of software module(s), which can be installed on the aggregation point of traffic being identified in networks. For example, possible installation points are Internet border of operator's core networks, especially equipments closely related to service differentiation/control tasks, or general Gateway. Current equipment platforms, such as Cisco CSG/SSG, Nokia ISN, Siemens IPS, can provide sufficient hardware/software support for implementation of system mentioned in this invention.

Although the present invention is described in conjunction with the drawing as the above, it is not limited to such descriptions, but various modifications can be made thereto within the scope disclosed by the appended claims.

References:

[1] S. Ehlert, S. Petgang. Analysis and signature of Skype VoIP session traffic. Technical Report. Jul. 2006.
[2] Ipp2p, http://www.ipp2p.Org/. 17filter, http://17-filter.sourceforge. net/.
[3] K. Suh and et al. Characterizing and detecting Skype-relayed traffic. IEEE Infocom'06, Apr. 2006.
[4] X. Wang and et al. Tracking anonymous peer-to-peer VoIP calls on the Internet. ACM CCS'05, Nov. 2005.

## Claims

1. A method for identifying VoIP traffics in networks, **characterized in that** the method comprises the following steps:

   dividing subscribers which all data connections correspond to into potential VoIP application users and ordinary users based on user identity;
   monitoring traffic of potential VoIP application users and collecting statistics of interest;
   correlating the collected statistics with *a priori* knowledge of VoIP applications' traffic profile, and calculating similarity index $SI_p$;
   if analysis revealing a connection exhibits high correlation between said statistics and the *priori* knowledge of VoIP applications' traffic profile, applying perturbation to the connection of the monitored potential VoIP application user and observe feedback $SI_a$;
   combining the similarity index $SI_p$ and the feedback $SI_a$ together to calculate identification result D; if the identification result D being greater than a threshold, identifying the connection of the monitored potential VoIP application user as a VoIP application connection.

2. The method according to claim 1, **characterized in** while a subscriber communicating with servers, taging the subscriber as a potential VoIP application user.

3. The method according to claim 1, **characterized in that** the method further comprises using heuristics to analyze the interaction during user login process.

4. The method according to claim 2, **characterized in that** said heuristics include applying deep packet inspection to user login request packets or analyzing user login connection patterns.

5. The method according to any one of claims 1 - 4, **characterized in that** the identification result D is determined with the similarity index $SI_p$ and the feedback $SI_a$ by

$$D = \left\lfloor \frac{\delta \cdot SI_p + (1-\delta) \cdot SI_a}{\eta_0} \right\rfloor \qquad (2)$$

wherein, $\delta$ is the weight determined depending on VoIP applications, with its value ranges from 1 to 0, while $\eta_0$ is the threshold determined depending on VoIP applications.

6. The method according to any one of claims 1 - 4, **characterized in that** said statistics of interest are two-tiered: at connection level, the statistics is duration or average bit rate; at data packet level, the statistics is packet size or timestamp.

7. The method according to claim 6, **characterized in that,** depending on codecs in VoIP applications, the statistics of interest can be selected.

8. The method according to any one of claims 1 - 4, **characterized in that** said perturbation is packet drop rate.

9. The method according to any one of claims 1 - 4, **characterized in that** the user identity is the identification used by the network to differentiate different users.

10. The method according to claim 9, **characterized in that** the user identity is at least one of PDP context of WCDMA mobile communication networks, IP address or PPP session ID of fixed communication networks.

11. A system for identifying VoIP traffics in networks, comprises:
General Classifier and L3/L4 Information Filter, said L3/L4 Information Filter being connected to the downstream of the General Classifier to filter information regarding VoIP and
returning the filtered results to the General Classifier through an internal control message mechanism, so that subscribers, which all data connections correspond to, being divided into potential VoIP application users and ordinary users by the General Classifier based on user identity, **characterized in that** the system also comprises:

Packet Statistic Collector, used to monitor traffic of potential VoIP application users divided by the General Classifier, and collect statistics of interest, the Packet Statistic Collector outputs the statistics it has collected;
Analyzer and Detector, used to decide if one connection contains VoIP traffic, by correlating statistics outputted by the Packet Statistic Collector with a priori knowledge of VoIP applications' traffic profile;
Perturbation Generator, used to interact with Analyzer and
Detector and generate statistical perturbation applied to the connection of the monitored potential VoIP application user.

12. The system according to claim 11, **characterized in that** the system further comprises VoIP Attribute Recognizer, using heuristics to analyze the interaction processes during user logins, the VoIP Attribute Recognizer accepting the connections filtered by L3/L4 Information Filter and returning the results through an internal control message mechanism to the General Classifier.

13. The system according to claim 12, **characterized in that** said heuristics include applying deep packet inspection to user login request packets or analyzing user login connection patterns.

14. The system according to any one of claims 11 - 13, **characterized in that,** in the Analyzer and Detector, the collected statistics are correlated with a priori knowledge of VoIP applications' traffic profile, and similarity index SIp is calculated; if analysis reveals a connection exhibits high correlation between said statistics and the priori knowledge of VoIP applications' traffic profile, perturbation is applied to the connection of the monitored potential VoIP application user and observe feedback SIa; the similarity index SIp and the feedback SIa are combined together to calculate identification result D; if the identification result D is greater than a threshold, the connection of the monitored potential VoIP application user is identified as a VoIP application connections.

15. The system according to claim 14, **characterized in that** the identification result D is determined with the similarity index SIp and the feedback SIa by

$$D = \left\lfloor \frac{\delta \cdot SI_p + (1-\delta) \cdot SI_a}{\eta_0} \right\rfloor \qquad (2)$$

,

wherein, $\delta$ is the weight determined depending on VoIP applications, with its value ranges from 1 to 0, while $\eta_0$ is the threshold determined depending on VoIP applications.

16. The system according to any one of claims 11 - 13, **characterized in that** said statistics of interest are two-tiered: at connection level, the statistics is duration or average bit rate; at data packet level, the statistics is packet size or timestamp.

17. The system according to claim 16, **characterized in that** depending on codecs in VoIP applications, the statistics of interest can be selected.

18. The system according to any one of claims 11 - 13, **characterized in that** said perturbation is packet drop rate.

19. The system according to any one of claims 11 - 13, **characterized in that** the user identity is the identification used by the network to differentiate different users.

20. The system according to claim 19, **characterized in that** the user identity is at least one of PDP context of WCDMA mobile communication networks, IP address or PPP session ID of fixed communication networks.

21. The system according to any one of claims 11 - 13, **characterized in that** the system is installed on the aggregation point of traffic being identified in networks.

22. The system according to claim 21, **characterized in that** the aggregation point of traffic being identified in networks are Internet border of operator's core networks or Gateway.

VoIP

Text Message

Signaling

Mixed Packets in
One Connection

Access Link

Aggregation
Point

To Internet

VoIP
Identification
Node

FIG.1

**FIG.2**

**European Patent Office**

**EUROPEAN SEARCH REPORT**

Application Number

EP 07 02 1034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | COSTEUX J, GUYARD F, BUSTOS A: "Detection and Comparison of RTP and Skype Traffic and Performance" IEEE, [Online] November 2006 (2006-11), pages 1-5, XP002485249 France Telecom R&D, Sophia-Antipolis, FRANCE ISSN: 1930-529X ISBN: 1-4244-0356-1 Retrieved from the Internet: URL:http://ieeexplore.ieee.org/iel5/415062 9/4150630/04151092.pdf?tp=&arnumber=415109 2&isnumber=4150630> [retrieved on 2008-06-20] * page 1, paragraph I.A. - page 4, paragraph III.A; figure 1 * ----- | 1-22 | INV. H04L12/24 ADD. H04L12/26 |
| Y,D | SUH K ET AL: "Characterizing and Detecting Skype-Relayed Traffic" INFOCOM 2006. 25TH IEEE INTERNATIONAL CONFERENCE ON COMPUTER COMMUNICA TIONS. PROCEEDINGS, IEEE, PI, 1 April 2006 (2006-04-01), pages 1-12, XP031072353 ISBN: 978-1-4244-0221-2 * page 1, paragraph I. - page 11, paragraph V.D. * ----- | 1-22 | |
| A | DARIO BONFIGLIO ET AL: "Revealing skype traffic: when randomness plays with you" PROCEEDINGS OF ACM SIGCOMM, XX, XX, 27 August 2007 (2007-08-27), pages 37-48, XP007903883 * page 37, paragraph ABSTRACT - page 44, paragraph 4.2.4 * ----- | 1,6,7, 11,16,17 | **TECHNICAL FIELDS SEARCHED (IPC)** H04L |

-/--

The present search report has been drawn up for all claims

| Place of search | Date of completion of the search | Examiner |
|---|---|---|
| Munich | 24 June 2008 | Fischer, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 02 1034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EMANUEL P FREIRE ET AL: "On Metrics to Distinguish Skype flows from HTTP traffic" NETWORK OPERATIONS AND MANAGEMENT SYMPOSIUM, 2007. LANOMS 2007. LATIN AMERICAN, IEEE, PI, 1 September 2007 (2007-09-01), pages 57-66, XP031152195 ISBN: 978-1-4244-1181-8 * page 60, paragraph IV. - page 62, paragraph V. * * page 64, paragraph VII. * ----- | 1,6,11, 16 | |
| A | JUN LI ET AL: "Identifying Skype Traffic by Random Forest" WIRELESS COMMUNICATIONS, NETWORKING AND MOBILE COMPUTING, 2007. WICOM 2007. INTERNATIONAL CONFERENCE ON, IEEE, PISCATAWAY, NJ, USA, 1 September 2007 (2007-09-01), pages 2841-2844, XP031140380 ISBN: 978-1-4244-1311-9 * page 2841, paragraph I * * page 2841, paragraph III.A - page 2843, paragraph IV.C * ----- | 1,6,11, 16 | TECHNICAL FIELDS SEARCHED (IPC) |

The present search report has been drawn up for all claims

| Place of search | Date of completion of the search | Examiner |
|---|---|---|
| Munich | 24 June 2008 | Fischer, Erik |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. EHLERT ; S. PETGANG.** Analysis and signature of Skype VoIP session traffic. *Technical Report.,* July 2006
- **K. SUH et al.** Characterizing and detecting Skype-relayed traffic. *IEEE Infocom,* 06 April 2006

- **X. WANG et al.** Tracking anonymous peer-to-peer VoIP calls on the Internet. *ACM CCS,* 05 November 2005